# EUROPÄISCHE PATENTSCHRIFT

(11) **EP 1 132 132 B1**
(45) Veröffentlichungstag und Bekanntmachung des Hinweises auf die Patenterteilung: **21.04.2004**
(21) Anmeldenummer: 01100549.3
(22) Anmeldetag: 10.01.2001
(51) Int. Cl.: B01J 31/40, C07C 67/36

(54) **Verfahren zur Rückgewinnung von Katalysor-Übergangsmetallen aus salzhaltigen Reaktionsgemischen**
Method for recovering catalyst transition metals from salt-containing reaction mixtures
Procédé de récupération de métaux de transition d'un catalyseur à partir de mélanges réactionnels contenant des sels

(30) Priorität: 25.02.2000 DE 10008904
(43) Veröffentlichungstag der Anmeldung: 12.09.2001
(73) Patentinhaber: Degussa AG, 40474 Düsseldorf (DE)
(72) Erfinder: Bauer, Frank, Dr., 45721 Haltern (DE); Prange, Uwe, Dr., 53859 Niederkassel (DE); Theis, Christoph, Dr., 53859 Niederkassel (DE)

(56) Entgegenhaltungen:
- US-A- 3 920 449
- US-A- 4 292 448
- US-A- 5 585 077
- US-A- 5 776 848
- PATENT ABSTRACTS OF JAPAN vol. 006, no. 078 (C-102), 15. Mai 1982 (1982-05-15) & JP 57 014557 A (DENKI KAGAKU KOGYO KK), 25. Januar 1982 (1982-01-25)

## Beschreibung

Die Erfindung betrifft ein Verfahren zur Rückgewinnung von Katalysator-Übergangsmetallen, aus der Gruppe, die durch Ruthenium, Platin, Palladium und Cobalt gebildet wird, insbesondere von Cobalt, aus salzhaltigen Reaktionsgemischen und deren Überführung in neue Katalysatoren.

Bei einer Vielzahl von chemischen Umsetzungen fallen Reaktionsgemische an, die neben verwendetem Katalysator beziehungsweise Katalysatoren und dessen Folge/Zersetzungsprodukten salzartige Anteile aufweisen.

Das in US 5 776 848 beschriebene Verfahren bezieht sich beispielsweise auf die Rückgewinnung eines Molybdän-haltigen Epoxidierungskatalysator, bei dem die Abtrennung die Abtrennung des Metalls dadurch herbeigeführt wird, dass nach Verbrennung eines Molybdän- und Natrium-haltigen Prozess-Stromes der abgetrennte wässrige Strom zur Abtrennung von CO₂ auf pH 5,1 bis 6,1 angesäuert wird und aus der so erzeugten Lösung das Molybän nach Zugabe von CalciumVerbindungen in Form des schwerlöslichen CaMoO₄ ausgefällt wird. Nachteilig hierbei ist der Verbrauch an zusätzlichen Hilfsstoffen wie Säure und CalciumVerbindungen, sowie die aufwändige Verfahrensweise der Rückgewinnung als Calciumsalz des Molybdäns.

Das in US 3 920 449 beschriebene Verfahren bezieht sich hingegen auf die Rückgewinnung von Metallen der VIII. Nebengruppe aus einer Lösung, die eine Verbindung eines Elements der VIII. Nebengruppe und eine Organophosphor-Verbindung enthält, wobei eine beide Komponenten enthaltende organische Lösung verbrannt wird, das Verbrennungsprodukt unmittelbar in eine wässrige Absorptionslösung eingeführt wird, um die Edelmetallpartikel der VIII. Nebengruppe und Phosphoroxid in wässriger Lösung aufzufangen und aus der phosphorsauren Lösung das Edelmetall abgetrennt wird. Eine Lehre für die Rückgewinnung von Metallen der VIII. Nebengruppe ohne Anwesenheit von Phosphorverbindungen wird hier nicht gegeben.

Weiterhin sind hier Carbonylierungsreaktionen zu nennen, bei denen eine Carbonylierung von halogensubstituierten Verbindungen, insbesondere Chlor-substituierten Verbindungen, zum Beispiel in Gegenwart von Katalysator-Verbindungen basierend auf Metallen der achten Nebengruppe des Periodensystems der Elemente wie Ruthenium-, Platin- und Palladium-Salzen oder Komplex-Verbindungen sowie Cobaltverbindungen wie insbesondere Cobaltcarbonyl-Komplexen und hieraus generierbare Spezies wie Alkali-, insbesondere Natriumsalze, des Cobaltcarbonylwasserstoffs durchgeführt wird. Meist werden diese Carbonylierungsreaktionen in Gegenwart einer Base durchgeführt, so dass schließlich nach Beendigung der Umsetzung eine Mischung aus dem Carbonylierungsprodukt, gegebenenfalls verwendetem Lösemittel, gelöstem Kohlenmonoxid, Katalysator und/oder dessen Folgeprodukten, während der Reaktion gebildeten Salzen sowie gegebenenfalls weiteren Komponenten vorliegt.

Die Aufarbeitung derartiger Reaktionsmischungen ist primär von dem Ziel geleitet, eine möglichst verlustfreie Isolierung des Produktes zu erreichen. Im Hinblick auf eine Realisierung entsprechender Verfahren im großtechnischen Maßstab kommen jedoch weitere Aspekte hinzu. Neben einer einfachen Rückgewinnung von gegebenenfalls vorhandenen Lösemitteln sind hier vor allem Verfahren gefragt, welche eine möglichst quantitative Rückgewinnung des eingesetzten Katalysators oder dessen Folgeprodukte in einer Form erlauben, die eine einfache Überführung in neuen Katalysator ermöglicht.

Weiterhin gilt es aus wirtschaftlichen Gründen, aber auch aus Gründen der Schonung der natürlichen Rohstoffe, das in der Reaktionsmischung enthaltene Salz beziehungsweise Salzgemisch in einer Form zurückzugewinnen, die eine problemlose Verwertung des zurückgewonnenen Salzes in anderen Prozessen erlaubt.

So kommt beispielsweise für die Aufarbeitung salzhaltiger, Cobalt-Katalysator enthaltender Reaktionsmischungen als einfache Methode ein Eintragen des Reaktionsgemisches in wässrige Säure beziehungsweise ein Versetzen der Reaktionsmischung mit wässriger Säure in Frage. Durch Lösen des Salzes und der Cobaltverbindungen in der Säure lässt sich das Produkt - gegebenenfalls zusammen mit einem oder mehreren der in der Reaktionsmischung enthaltenen Lösemittel - in der Regel als separate organische Phase abtrennen. Die wässrige Phase enthält dann die gesamte Salzfracht zusammen mit den säurelöslichen Cobaltverbindungen. Nach Zusatz eines geeigneten Fällungsmittels kann das Cobalt nunmehr aus der wässrigen Phase in Form wasserunlöslicher Cobaltverbindungen, zum Beispiel in Form von Cobalthydroxid, gefällt und abgetrennt werden.

Die genannte Vorgehensweise ist für den Fall der technisch besonders bedeutenden Carbonylierung von Halogenessigsäureestern mit Kohlenmonoxid und Umsetzung mit einem Alkohol und einer Base in Gegenwart eines Cobaltcarbonyl-Komplex-Katalysators beschrieben (JP 60 033 376). Zwar kann das auf diese Weise abgetrennte Cobalt nach Waschen und Trocknen unter den üblichen Bedingungen in neuen Cobaltcarbonyl-Komplex-Katalysator überführt werden, der Rückgewinnungsprozess erfordert aber zunächst ein Ansäuern und dann ein Alkalisch-Stellen der Reaktionsmischung und geht daher mit einem hohen Reagenzienverbrauch einher.

Auch hat sich gezeigt, dass zwar der im Falle einer Herstellung kurzkettiger Malonsäurediester überwiegend in der wässrigen Phase gelöste und zum Erzielen guter Ausbeuten unbedingt erforderliche Alkohol-Überschuß destillativ zurückgewonnen werden kann, die Rückgewinnung des ebenfalls in der wässrigen Phase gelösten Salzes oder Salzgemisches in einer Form, welche die Verwertung in anderen Prozessen erlaubt, aber mit Schwierigkeiten verbunden ist.

So enthält die nach der Abtrennung des Alkohols verbliebene Salzlösung neben gelöstem Zielprodukt noch geringe Mengen gelösten Übergangsmetalls wie Cobalt und eine Vielzahl weiterer wasserlöslicher Verunreinigungen, insbesondere Verseifungs- und Kondensationsprodukte.

Es wurde zwar gefunden, dass die Extraktion gelösten Zielproduktes unter Einsatz geeigneter, wenig wasserlöslicher oder wasserunlöslicher Lösemittel gelingt und zum Beispiel eine Abtrennung von Restmengen gelösten Cobalts unter Einsatz geeigneter Ionenaustauscher, vorzugsweise eines chelatisierenden Selektiv-Ionenaustauschers zum Beispiel mit der Handelsbezeichnung TP 207 der Bayer AG, problemlos möglich ist, durch Eindampfen der verbliebenen Salzlösung jedoch Salze beziehungsweise Salzgemische erhalten wurden, deren organische Verunreinigungen von beispielsweise 3 Gew.-% eine sinnvolle Verwertung in anderen Prozessen nicht zuließen. Auch nach Behandlung der verbliebenen Salzlösung mit Aktivkohle und anschließendem Eindampfen wurden - unabhängig von dem für die Aktivkohle-Behandlung gewählten pH-Wert - keine signifikant verbesserten Salzqualitäten erhalten.

Insbesondere für den Anfall von Natriumchlorid und dessen denkbaren Einsatz in der Chloralkalielektrolyse erwiesen sich die so gewonnenen Salzqualitäten als völlig ungeeignet.

Durch fraktionierte Kristallisation des in der wässrigen Phase gelösten Salzes beziehungsweise der in der wässrigen Phase gelösten Salze konnten zwar in einigen Fällen Salzqualitäten erhalten werden, welche eine Verwertung der Salze in anderen Prozessen ermöglichen, bei unter technischen Bedingungen akzeptablen Eindampfraten von > 75 % wurden aber immer auch Salzfraktionen mit einem relativ hohen Anteil an organischen Verunreinigungen von typischerweise 3 Gew.-% erhalten.

Neben der Option, das in der Reaktionsmischung enthaltene Übergangsmetall und das in der Reaktionsmischung enthaltene Salz beziehungsweise Salzgemisch durch Lösen in Wasser von den übrigen Komponenten der Reaktionsmischung abzutrennen, besteht in der Regel die Möglichkeit, das in der Reaktionsmischung üblicherweise suspendierte Salz beziehungsweise Salzgemisch zusammen mit dem in der Reaktionsmischung enthaltenen Übergangsmetall beziehungsweise der Übergangsmetallverbindung durch Filtration abzutrennen. Hierzu ist in einigen Fällen eine Vorbehandlung des Reaktionsgemisches erforderlich. So können zum Beispiel die technisch besonders bedeutenden Cobaltcarbonyl-Komplex-Katalysatoren durch einen vorgelagerten Oxidationsschritt (JP 57 014 557) - durch Behandeln des Reaktionsgemisches mit Luft - in üblicher Weise in im Reaktionsgemisch unlösliche Cobaltverbindungen überführt werden.

Es hat sich aber gezeigt, dass ein so abgetrenntes Gemisch aus Salzen und Übergangsmetallverbindung auch nach mehrmaligem Waschen mit organischen Lösemitteln, Lösen in Wasser oder wässriger Säure, vollständiger Abtrennung des Übergangsmetalls und anschließendes Eindampfen zur Trockne Salze beziehungsweise Salzgemische lieferte, deren Gehalte an organischen Verunreinigungen von typischerweise 3 Gew.-% eine sinnvolle Verwertung in anderen Prozessen nicht zuließen. Erneut wurden auch hierbei nach Behandlung der Salzlösung mit Aktivkohle und anschließendes Eindampfen - unabhängig von dem für die Aktivkohle-Behandlung gewählten pH-Wert - keine signifikant verbesserten Salzqualitäten gewonnen. Durch Eindampfkristallisation ließen sich nur bei geringen Eindampfraten Salze beziehungsweise Salzgemische erhalten, deren Gehalte an organischen Verunreinigungen unterhalb von 0,5 Gew.-% lagen.

Es bestand daher die Aufgabe, ein allgemein anwendbares Verfahren zur Rückgewinnung von eingesetztem Katalysator-Metall zu entwickeln, mit dem Ziel, das eingesetzte Katalysator-Metall in einer Form zu isolieren, die dessen unproblematische Rückführung, zum Beispiel durch Herstellung frischen Katalysators, in den Synthese-Prozess erlaubt. Ferner sollte die Anwendungsbreite des Rückgewinnungs-Verfahrens so bemessen sein, dass hierbei auch eine Isolierung des in der Reaktionsmischung enthaltenen Salzes in reiner Form und dessen Verwertung in anderen Prozessen ermöglicht wird.

Überraschend wurde nun gefunden, dass die oben erläuterten Nachteile auf einfache Weise dadurch vermieden werden können, dass das in der Reaktionsmischung enthaltene Salz beziehungsweise Salzgemisch zusammen mit den im Reaktionsgemisch enthaltenen Übergangsmetallverbindungen gegebenenfalls nach Vorbehandlung mit Luft und gegebenenfalls nach erfolgtem Zusatz einer Base in eine Verbrennungszone gefördert wird. Das die Verbrennungszone verlassende Rauchgas-Salz-Gemisch kann gegebenenfalls zwecks Wärmerückgewinnung in geeigneter Form abgekühlt werden. Anschließend wird mit Wasser gequencht.

Gegenstand der Erfindung ist daher ein Verfahren zur Rückgewinnung von Übergangsmetallen ausgewählt aus der Gruppe, die durch Ruthenium, Platin, Palladium und Cobalt gebildet wird, aus salzhaltigen Reaktionsgemischen übergangsmetallkatalysierter Prozesse, dadurch gekennzeichnet, dass die Übergangsmetallverbindungen und Salz oder Salze mit organischen Verunreinigungen aus den Reaktionsmischungen bei neutralem bis alkalischem pH-Wert ggf. nach Neutralisierung oder Alkalisierung durch Basenzugabe abgetrennt und in eine Verbrennungszone mit Temperaturen von 500 bis 2000 °C gefördert werden, das die Verbrennungszone verlassende Rauchgas-Salz-Gemisch mit Wasser gequencht wird, der übergangsmetallhaltige Verbrennungsrückstand aus der erhaltenen Quenchsole abgetrennt, bei Temperaturen von 80 bis 180 °C getrocknet und als Einsatzprodukt für die Katalysatorherstellung wiederverwendet wird.

Die Abtrennung des Gemisches aus Salz beziehungsweise Salzen und den - nach gegebenenfalls erfolgter Vorbehandlung wie dem In-Kontakt-bringen mit Sauerstoff und/oder dem Zusatz einer Base - unlöslichen Übergangsmetallverbindungen kann zum Beispiel auf einfache Weise durch Filtration oder Dekantieren erfolgen. Als vorteilhaft hat es sich in diesem Fall erwiesen, die Feststoffe mit einem oder mehreren Lösemitteln, bevorzugt solchen, welche bereits in der Reaktionsmischung enthalten sind, und/oder Wasser zu waschen. Als organische Lösemittel werden mit Wasser nicht oder nur wenig mischbare Lösemittel, wie aliphatische, cycloaliphatische oder gegebenenfalls substituierte aromatische Kohlenwasserstoffe, Ether oder dergleichen eingesetzt. Beispiele sind Toluol und Methyl-tert.-butylether. Nach möglichst weitgehender Entfernung anhaftender Lösemittel beziehungsweise Waschflüssigkeiten kann das Feststoffgemisch dann in die Verbrennungszone eingetragen werden.
Besonders vorteilhaft wird das erfindungsgemäße Verfahren derart durchgeführt, dass die gesamte Reaktionsmischung - gegebenenfalls nach vorstehend beschriebener Vorbehandlung zur Zersetzung des Katalysators - unter ausreichend milden Destillationsbedingungen, bevorzugt unter Verwendung eines Dünnschichtverdampfers oder Dünnschichttrockners/-verdampfers, von verdampfbaren Komponenten möglichst weitgehend befreit wird. Die verbliebene Mischung aus dem Salz beziehungsweise den Salzen und dem Übergangsmetall-Katalysator beziehungsweise dessen Folgeprodukten kann dann nach dem erfindungsgemäßen Verfahren vorzugsweise kontinuierlich in eine Verbrennungszone eingespeist werden.

Eine Abtrennung des Zielproduktes und des beziehungsweise der eingesetzten Lösemittel von den nichtverdampfbaren Komponenten der Reaktionsmischung kann selbstverständlich auch nacheinander erfolgen. Unabhängig davon fällt der nach Abtrennung der verdampfbaren Komponenten der Reaktionsmischung verbliebene Rückstand üblicherweise in Form eines staubförmigen Feststoffes an, der bei geeigneter Wahl der Destillationsbedingungen nicht zur Agglomeratbildung neigt. Besonders bevorzugt erfolgt daher eine pneumatische Förderung in die Verbrennungszone. Als Fördergase können zum Beispiel Stickstoff, Argon, oder vorzugsweise Luft verwendet werden.

Es wurde weiterhin gefunden, dass nur dann eine weitestgehende Befreiung des Gemisches aus Salz beziehungsweise Salzen und den Übergangsmetallverbindungen von Verunreinigungen gelingt, wenn die Verbrennungszone Temperaturen von 500 bis 2000 °C, vorzugsweise 800 bis 1800 °C, besonders bevorzugt 900 bis 1600 °C aufweist. Weiterhin erwies sich die Verwendung eines Sauerstoff- beziehungsweise Luftüberschusses beim Betrieb der Stützfeuerung als unverzichtbar. Dieser Überschuss kann bis zum 3fachen, bevorzugt bis zum 2fachen, des Brennstoff-Gemisches der Stützfeuerung betragen.
Als Übergangsmetallverbindungen sind insbesondere Metallverbindungen von Metallen der achten Nebengruppe des Periodensystems der Elemente wie zum Beispiel Ruthenium-, Platin- und Palladiumverbindungen sowie Cobaltverbindungen wie insbesondere Cobaltcarbonyl-Komplexe (zum Beispiel Dicobaltoctacarbonyl) und hieraus generierbare Spezies wie Alkalisalze, insbesondere Natriumsalze, des Cobaltcarbonylwasserstoffs nach dem oben genannten Verfahren behandelbar.

Das Quenchwasser wird zur Vermeidung unnötiger Verunreinigungen vorzugsweise in Form von vollentsalztem Wasser eingesetzt. Es kann aber auch zunächst zum Betrieb von Einrichtungen zur Rauchgaswäsche wie Venturiwäschern, Nass-Elektrofiltern oder Waschkolonnen verwendet werden, bevor es zum Lösen des in die Verbrennungszone eingebrachten Salzes beziehungsweise Salzgemisches dient.

Es wurde überraschend gefunden, dass die für die Quenche eingesetzte Wassermenge so gering gewählt werden kann, dass die Löslichkeitsgrenze des Salzes beziehungsweise Salzgemisches erreicht wird, ohne dass es zu Anbackungen an Anlagenteilen oder zum Zuwachsen von Anlagenteilen kommt.

Weiterhin wurde überraschend gefunden, dass der Quenchaustrag das Übergangsmetall praktisch quantitativ in unlöslicher Form enthält. Der gelöste Anteil an zum Beispiel Cobalt betrug üblicherweise weniger als 100 ppm, bezogen auf die Quenchsole. Das Übergangsmetall wie Cobalt kann in dem Quenchaustrag unter Gleichgewichtsbedingungen aber nur dann in weitgehend ungelöster Form vorliegen, wenn dieser allenfalls schwach sauer reagiert.

Unbedingte Voraussetzung für eine erfolgreiche Anwendung des erfindungsgemäßen Verfahrens ist daher, dass die in die Verbrennungszone eingebrachte Mischung aus Salz beziehungsweise Salzen und den Übergangsmetallverbindungen weitgehend neutral oder besser basisch reagiert. Anderenfalls muss die Mischung mit einer geeigneten Base beziehungsweise geeigneten Basen versetzt werden. Als Basen sind insbesondere Alkali- und Erdalkalimetall-hydroxide und -carbonate geeignet. Vorzugsweise wird Natriumcarbonat eingesetzt. Man kann auch den Quenchaustrag mit einem beziehungsweise mehreren geeigneten Fällungsreagenzien versetzen, was in der Regel jedoch wenig vorteilhaft ist.

Besonders geeignet ist das erfindungsgemäße Verfahren für solche Prozesse, bei denen die Mischung aus Salz beziehungsweise Salzen und den Übergangsmetallverbindungen von vornherein alkalisch reagiert. So muss etwa bei der Carbonylierung von Halogenessigsäurealkylestern und Umsetzung mit Alkoholen nach dem sog. Sodaverfahren oder dem sog. Erdalkalimetallcarbonat-Verfahren (JP 53 112 808) ein Basenüberschuss eingesetzt werden, damit eine Zersetzung des Cobaltcarbonyl-Komplex-Katalysators während der Reaktion vermieden wird und hohe Ausbeuten erzielt werden können. In diesem Fall können im Vergleich zu der in JP 60 033 376 beschriebenen Vorgehensweise nicht nur Verfahrensschritte, sondern auch Reagenzien eingespart werden.

Es hat sich gezeigt, dass das erfindungsgemäße Verfahren unter Verwendung einer ausgekleideten, ungekühlten Brennkammer durchgeführt werden kann. In diesem Fall wird unter Einsatz von Erdgas oder Erdöl zur Stützfeuerung schließlich zum Beispiel ein cobalthaltiges Pulver gewonnen, welches unter milden Bedingungen in quantitativer Ausbeute Dicobaltoctacarbonyl liefert.

Vorteilhafter kommt allerdings eine gekühlte Brennkammer zum Einsatz, da auf diese Weise Verunreinigungen des Quenchaustrages durch Korrosion der Auskleidung vermieden werden. Als ganz besonders vorteilhaft erwies sich der Einsatz einer ungekühlten Vorbrennkammer in Kombination mit einer gekühlten Hauptbrennkammer. Die Dosierung des Gemisches aus Salz beziehungsweise Salzen und Übergangsmetallverbindungen kann dann bevorzugt an der Einschnürung zwischen Vorbrenn- und Hauptbrennkammer erfolgen.

Überraschenderweise wurde gefunden, dass die zur Überführung des aus dem Quenchaustrag isolierten Gemisches von zum Beispiel Cobaltverbindungen in Dicobaltoctacarbonyl erforderlichen Temperaturen in erheblichem Maße von der Qualität des zur Stützfeuerung eingesetzten Brennstoffes abhängen. So lieferten Wasserstoff und Gemische von Wasserstoff mit kohlenwasserstoffhaltigen Gasen im Falle der gekühlten Hauptbrennkammer bessere Ergebnisse als reine Kohlenwasserstoffe. Die Verwendung von Wasserstoff oder wasserstoffhaltigen Gasen zur Stützfeuerung wird daher besonders bevorzugt. Es können aber auch Erdgas und Gemische mit Erdgas, Erdöl und/oder flüssige Kohlenwasserstoffe eingesetzt werden.

Die im Quenchaustrag enthaltenen ungelösten Übergangsmetallverbindungen können mechanisch, zum Beispiel durch Filtration, bevorzugt aber durch Dekantieren, abgetrennt werden. Im Falle des Abdekantierens hat es sich in der Praxis als vorteilhaft erwiesen, dem Quenchaustrag ein Flockungsmittel, bevorzugt ein anionisches Polyacrylat, zuzusetzten. Nach Waschen des abgetrennten übergangsmetallhaltigen Schlammes mit Wasser, bevorzugt vollentsalztem Wasser, kann dieser getrocknet und das erhaltene pulverförmige Material als Edukt zur Herstellung neuen Katalysators verwendet werden.

Von dem bei hohen Temperaturen thermodynamisch stabilen Cobalt(II)-Oxid (Kirk-Othmer, Encyclopedia of Chemical Technology, 4th Ed., Vol. 6, S. 781, J. Wiley and Sons Inc., 1993) ist zum Beispiel bekannt, dass es sich unter den üblichen Reaktionsbedingungen nicht in Dicobaltoctacarbonyl überführen lässt. Im Hinblick auf die sehr hohen Temperaturen in der Verbrennungszone bei dem hier beschriebenen Verfahren ist es daher äußerst überraschend, dass zum Beispiel das auf einfache Weise isolierte Gemisch aus Cobaltverbindungen ohne weitere Verfahrensschritte unter milden Bedingungen durch Umsetzung mit Kohlenmonoxid und Wasserstoff praktisch quantitativ in Dicobaltoctacarbonyl überführt werden kann.
Noch mehr muss überraschen, dass das erfindungsgemäße Verfahren im Falle einer Anwesenheit von Alkalimetallcarbonaten oder Erdalkalimetallcarbonaten im Reaktionsgemisch und im Falle des Cobalts als Übergangsmetall das unter den Verbrennungsbedingungen thermisch instabile Cobaltcarbonat als Hauptprodukt liefert, obwohl das Verfahren zu einem praktisch quantitativen Ausbrand der organischen Verunreinigungen führt. Vom Cobaltcarbonat ist wiederum bekannt, dass es sich unter milden Reaktionsbedingungen in Dicobaltoctacarbonyl überführen lässt.

In der Beobachtung, dass bereits sehr niedrige Reaktionstemperaturen von beispielsweise 90 °C zur quantitativen Überführung der gemäß dem Verfahren vorliegender Erfindung wiedergewonnenen Cobaltspezies in Dicobaltoctacarbonyl ausreichen, ist ein ganz besonderer Vorteil des erfindungsgemäßen Verfahrens zu sehen. Dies ist nach der Erfindung auch für die Fälle zu sehen, in denen eine Verunreinigung der Carbonyllösung mit Methanol - gebildet aus Kohlenmonoxid und Wasserstoff - vermieden werden muss. Auch hat sich gezeigt, dass hohe Temperaturen von beispielsweise 180 °C bei der Generierung des Carbonyls in alkoholischen Medien zu einer erheblichen Bildung unerwünschter Nebenprodukte führen, welche wiederum die Isolierung reiner Zielprodukte im späteren Prozess erschweren. Schließlich gilt es im Hinblick auf die Realisierung im technischen Maßstab zu berücksichtigen, dass niedrige Reaktionstemperaturen für die Katalysatorherstellung mit geringeren Investitionskosten für den Druckreaktor einhergehen.

Unbedingte Voraussetzung für das Gelingen einer quantitativen Überführung des durch Filtration oder Dekantieren gewonnenen und dann getrockneten zum Beispiel cobalthaltigen Feststoffes in Dicobaltoctacarbonyl bei vergleichsweise niedrigen Temperaturen ist die Wahl ausreichend milder Trocknungsbedingungen. So wurde gefunden, dass Trocknungstemperaturen oberhalb von 180 °C dazu führen, dass der durch Filtrieren oder Dekantieren abgetrennte und anschließend gewaschene cobalthaltige Schlamm unter milden Reaktionsbedingungen nicht mehr quantitativ in Dicobaltoctacarbonyl überführt werden kann. Daher werden Trocknungstemperaturen von 80 bis 180 °C, besonders bevorzugt von 100 bis 130 °C, gewählt. Um bei niedrigen Trocknungstemperaturen dennoch zu akzeptablen Trocknungszeiten zu gelangen, hat es sich in der Praxis als zweckmäßig erwiesen, die Trocknung im Vakuum, zum Beispiel bei einem Absolutdruck von 100 mbar, vorzunehmen.

Der nach dem erfindungsgemäßen Verfahren isolierte übergangsmetallhaltige Schlamm beziehungsweise der nach dem Trocknen des Schlammes erhaltene Trockneraustrag erwies sich als praktisch frei von organischen Verunreinigungen. Er kann daher selbstverständlich zum Beispiel im Falle des Cobalts nicht nur zu Dicobaltoctacarbonyl, sondern - zum Beispiel durch Lösen in Säuren - zu beliebigen anderen Cobaltverbindungen umgearbeitet werden.

Weiterhin hat sich gezeigt, dass der so erhaltene Quenchaustrag bei Wahl geeigneter Bedingungen nur noch minimale Gehalte an organischen Verunreinigungen von beispielsweise 150 ppm TOC (Total Organic Carbon) aufweist. Nach Abtrennung von gelösten Übergangsmetallspuren unter Einsatz eines Ionenaustauschers, bevorzugt eines geeigneten Selektiv-Ionenaustauschers wie zum Beispiel TP 207 der Bayer AG, kann das durch Eindampfen oder Eindampfkristallisation aus dem Quenchaustrag isolierte Salz beziehungsweise Salzgemisch in einer Vielzahl von Prozessen verwertet werden.

Als besonders vorteilhaft hat sich das erfindungsgemäße Verfahren für den Fall erwiesen, dass es sich bei dem im Quenchaustrag gelösten Salz um Natriumchlorid handelt. So wurde gefunden, dass nach dem erfindungsgemäßen Verfahren isoliertes Natriumchlorid überraschenderweise sogar in der Chloralkalielektrolyse nach dem Amalgamverfahren eingesetzt werden kann, ohne dass es zu einem Abfall der Überspannung am Quecksilber und damit unerwünschter Wasserstoffentwicklung kommt.

Malonsäurediester sind vielseitige Synthese-Bausteine in der organischen Chemie zum Beispiel als Zwischenprodukte bei der Synthese von Pharmazeutika, Pflanzenschutzmitteln, Riechstoffen, Aromen, Farbstoffen und Kunststoffen.

Die folgenden Beispiele sollen das erfindungsgemäße Verfahren weiter erläutern, ohne dessen Anwendungsbereich einzuschränken.

### Beispiel 1: Rückgewinnung von Cobalt aus einem Reaktionsgemisch der Chloressigsäuremethylester-Carbonylierung (Vergleichsbeispiel)

In einem Schlaufenreaktor wurde unter üblichen Reaktionsbedingungen eine Mischung aus Chloressigsäuremethylester, Methanol und überschüssigem Natriumcarbonat in Gegenwart von 2 Mol-% Dicobaltoctacarbonyl zu Malonsäuredimethylester umgesetzt.
Die Reaktionsmischung wurde dann zunächst mit 20 Gew.-% Toluol versetzt, bevor man 5 Stunden lang Luft einleitete, wobei die Mischung auf einer Temperatur von 40 °C gehalten wurde. Anschließend wurden die Lösemittel und der Malonsäuredimethylester im Vakuum über einen Dünnschichtverdampfer vollständig abdestilliert (Ausbeute an Malonsäuredimethylester durch Aufarbeitung des Dünnschichtverdampfer-Destillates: 90 % der Theorie, bezogen auf die eingesetzte Menge an Chloressigsäuremethylester). Den verbliebenen pulverförmigen Rückstand löste man in verdünnter Salzsäure (pH = 3.0) und fällte das Cobalt durch Zugabe von verdünnter Natronlauge (pH = 12). Die nach Filtration erhaltene Sole wurde mit 4 % Aktivkohle, bezogen auf die gelöste Menge an Natriumchlorid, versetzt, 2 Stunden bei Raumtemperatur gerührt, erneut filtriert, von restlichen Cobaltspuren über Ionenaustauscher vom Typ TP 207 befreit und schließlich vollständig eingedampft. So erhaltenes Natriumchlorid wies einen Gehalt an organischen Verunreinigungen von etwa 3 Gew.-% auf und war für die Chloralkalielektrolyse nach dem Amalgamverfahren ungeeignet.

### Beispiel 2: Rückgewinnung von Cobalt aus einem Reaktionsgemisch der Chloressigsäuremethylester-Carbonylierung (Vergleichsbeispiel)

Es wurde wie in Beispiel 1 verfahren. Die mit Toluol versetzte und luftbehandelte Reaktionsmischung trug man jedoch derart in verdünnte Salzsäure ein, dass der pH-Wert 3.0 nicht unterschritt. Nach Abtrennung der organischen Phase wurde die wässrige Phase viermal mit Methyl-tert.-butylether extrahiert (Ausbeute an Malonsäuredimethylester durch Aufarbeitung der organischen Phase: 90 % der Theorie, bezogen auf die eingesetzte Menge an Chloressigsäuremethylester). Das Cobalt wurde durch Zugabe von verdünnter Natronlauge (pH = 12) gefällt. Die nach Filtration erhaltene Sole wurde mit 4 % Aktivkohle, bezogen auf die gelöste Menge an Natriumchlorid, versetzt, 2 Stunden bei Raumtemperatur gerührt, erneut filtriert, von restlichen Cobaltspuren über Ionenaustauscher TP 207 befreit und schließlich vollständig eingedampft. Das erhaltenes Natriumchlorid wies einen Gehalt an organischen Verunreinigungen von etwa 3 Gew.-% auf und war für die Chloralkalielektrolyse nach dem Amalgamverfahren ungeeignet.

### Beispiel 3: Rückgewinnung von Cobalt aus einem Reaktionsgemisch der Chloressigsäuremethylester-Carbonylierung (erfindungsgemäß)

Es wurde wie in Beispiel 1 verfahren. Den am Dünnschichtverdampfer angefallenen pulverförmigen Rückstand förderte man jedoch unter Verwendung von Luft pneumatisch in eine Verbrennungszone. Die Einbringung des Salzes erfolgte dabei an der Einschnürung zwischen ausgekleideter Vorbrennkammer und gekühlter Hauptbrennkammer. Die Oxidation der organischen Verunreinigungen wurde unter Einsatz eines Wasserstoff/Erdgas-Gemisches zur Stützfeuerung bei einem etwa dreifachen Luftüberschuss und einer Temperatur in der Vorbrennkammer von etwa 1600 °C vorgenommen.

Durch Quenchen mit vollentsalztem Wasser wurde eine an Natriumchlorid gesättigte Suspension erhalten, ohne dass es - selbst nach mehrtägigem Betrieb - zur Bildung von Salzanbackungen kam. Nach Abfiltrieren der Feststoffanteile enthielt die so gewonnene Natriumchloridlösung weniger als 100 ppm Cobalt; der TOC-Gehalt der Sole betrug weniger als 150 ppm. Durch anschließendes Abtrennen gelöster Cobaltspuren unter Verwendung eines Ionenaustauschers vom Typ TP 207 und vollständiges Eindampfen zur Trockne oder alternativ durch Eindampfkristallisation wurde eine Natriumchloridqualität erhalten, welche zum Einsatz in der Chloralkalielektrolyse nach dem Amalgamverfahren geeignet war.

Der durch Filtration abgetrennte cobalthaltige Schlamm wurde zweimal mit vollentsalztem Wasser gewaschen und anschließend bei 100 °C/100 mbar bis zur Gewichtskonstanz getrocknet. Durch Umsetzung des so erhaltenen pulverförmigen Trockneraustrags mit Wasserstoff und Kohlenmonoxid in Methanol-Toluol-Gemischen bei einer maximalen Reaktionstemperatur von 95 °C wurde in quantitativer Ausbeute Dicobaltoctacarbonyl erhalten. Die braungefärbten Lösungen wiesen keinen Feststoffanteil auf

Im Falle einer Trocknung des gewaschenen cobalthaltigen Schlammes bei 200 °C (nicht erfindungsgemäß) wurde unter den genannten Bedingungen kein vollständiger Umsatz zum Dicobaltoctacarbonyl erzielt. Die Carbonyllösungen enthielten ungelöste Feststoffanteile.

## Patentansprüche

1. Verfahren zur Rückgewinnung von Übergangsmetallen ausgewählt aus der Gruppe, die durch Ruthenium, Platin, Palladium und Cobalt gebildet wird, aus salzhaltigen Reaktionsgemischen übergangsmetallkatalysierter Prozesse,
**dadurch gekennzeichnet,**
**dass** die Übergangsmetallverbindungen und Salz oder Salze mit organischen Verunreinigungen aus den Reaktionsmischungen bei neutralem bis alkalischem pH-Wert, ggf. nach Neutralisierung oder Alkalisierung durch Basenzugabe, abgetrennt und in eine Verbrennungszone mit Temperaturen von 500 bis 2000 °C gefordert werden, das die Verbrennungszone verlassende Rauchgas-Salz-Gemisch mit Wasser gequencht wird, der übergangsmetallhaltige Verbrennungsrückstand aus der erhaltenen Quenchsole abgetrennt, bei Temperaturen von 80 bis 180 °C getrocknet und als Einsatzprodukt für die Katalysatorherstellung wiederverwendet wird.

2. Verfahren nach Anspruch 1,
**dadurch gekennzeichnet,**
**dass** die Reaktionsmischung vor der Abtrennung des Gemisches aus Salz oder Salzen, Übergangsmetallverbindungen und organischen Verunreinigungen einer Vorbehandlung zur Zersetzung des Übergangsmetallkatalysators zu in der Reaktionsmischung weitgehend unlöslichen oder nichtverdampfbaren Folgeprodukten unterworfen wird.

3. Verfahren nach Anspruch 1 oder 2,
**dadurch gekennzeichnet,**
**dass** die Vorbehandlung der Reaktionsmischung durch deren in-Kontaktbringen mit Sauerstoff oder einem sauerstoffhaltigen Gasgemisch erfolgt.

4. Verfahren nach Anspruch 1,
**dadurch gekennzeichnet,**
**dass** der Mischung aus Salz, Übergangsmetallverbindung und organischen Verunreinigungen eine oder mehrere basisch reagierende Substanzen zugesetzt werden.

5. Verfahren nach einem der vorhergehenden Ansprüche,
**dadurch gekennzeichnet,**
**dass** die Mischung aus Salz, Übergangsmetallverbindung und organischen Verunreinigungen durch destillative Befreiung der Reaktionsmischung von verdampfbaren Komponenten erhalten wird.

6. Verfahren nach einem der vorhergehenden Ansprüche,
**dadurch gekennzeichnet,**
**dass** die Reaktionsmischung, gegebenenfalls nach vorherigem Abdestillieren eines Teils der verdampfbaren Komponenten, zur Abtrennung des Produktes und gegebenenfalls weiterer Komponenten über einen Dünnschichtverdampfer oder Dünnschichttrockner gefahren wird.

7. Verfahren nach einem der vorhergehenden Ansprüche,
**dadurch gekennzeichnet,**
**dass** die Mischung aus Salz beziehungsweise Salzen, Übergangsmetallverbindungen und organischen Verunreinigungen durch Filtration aus dem gegebenenfalls zuvor von weiteren Komponenten der Reaktionsmischung befreiten Reaktionsgemisch abgetrennt wird.

8. Verfahren nach einem der vorhergehenden Ansprüche,
**dadurch gekennzeichnet,**
**dass** die Förderung des Gemisches aus Salz beziehungsweise Salzen, Übergangsmetallverbindungen und organischen Verunreinigungen in die Verbrennungszone pneumatisch erfolgt.

9. Verfahren nach einem der vorhergehenden Ansprüche,
**dadurch gekennzeichnet,**
**dass** die Verbrennungszone in eine Vor- und Hauptbrennkammer aufgeteilt ist und die Einbringung des Salzgemisches an der Einschnürung zwischen Vorbrennkammer und Hauptbrennkammer erfolgt.

10. Verfahren nach Anspruch 1 oder 9,
**dadurch gekennzeichnet,**
**dass** als Vorbrennkammer eine ausgekleidete Brennkammer und als Hauptbrennkammer eine gekühlte Brennkammer verwendet wird.

11. Verfahren nach einem der Ansprüche 1 bis 10,
**dadurch gekennzeichnet,**
**dass** zur Stützfeuerung Wasserstoff, Erdgas oder kohlenwasserstoffhaltige Gase oder deren Mischungen eingesetzt werden.

12. Verfahren nach einem der Ansprüche 1 bis 10,
**dadurch gekennzeichnet,**
**dass** zur Stützfeuerung Erdöl und/oder flüssige Kohlenwasserstoffe eingesetzt werden.

13. Verfahren nach einem der Ansprüche 1 bis 10,
**dadurch gekennzeichnet,**
**dass** die Temperatur in der Verbrennungszone 800 bis 1800 °C beträgt.

14. Verfahren nach einem der Ansprüche 11 oder 12,
**dadurch gekennzeichnet,**
**dass** die Stützfeuerung mit einem Sauerstoffüberschuß betrieben wird, wobei der Sauerstoff als solcher eingesetzt wird oder der Luft entstammt.

15. Verfahren nach einem der vorhergehenden Ansprüche,
**dadurch gekennzeichnet,**
**dass** das die Verbrennungszone verlassende Rauchgas-Salz-Gemisch gegebenenfalls nach Kühlung mit Wasser gequencht wird.

16. Verfahren nach einem der vorhergehenden Ansprüche,
**dadurch gekennzeichnet,**
**dass** die Abtrennung der unlöslichen Übergangsmetallverbindung beziehungsweise des Gemisches aus unlöslichen Übergangsmetallverbindungen aus der Quenchsole durch Dekantieren oder Filtration erfolgt.

17. Verfahren nach einem der vorhergehenden Ansprüche,
**dadurch gekennzeichnet,**
**dass** die Suspension aus der unlöslichen Übergangsmetallverbindung beziehungsweise den unlöslichen Übergangsmetallverbindungen, Wasser und dem gelösten Salz beziehungsweise Salzgemisch vor dem Abdekantieren der unlöslichen Übergangsmetallverbindung beziehungsweise unlöslichen Übergangsmetallverbindungen mit einem oder mehreren Flockungsmitteln behandelt wird.

18. Verfahren nach einem der vorhergehenden Ansprüche,
**dadurch gekennzeichnet,**
**dass** die abgetrennten unlöslichen Übergangsmetallverbindungen durch Waschen von anhaftendem löslichen Salz beziehungsweise anhaftenden löslichen Salzgemischen befreit werden.

19. Verfahren nach einem der vorhergehenden Ansprüche,
**dadurch gekennzeichnet,**
**dass** die Trocknung der abgetrennten Übergangsmetallverbindungen bei Temperaturen von 100 bis 130 °C erfolgt.

20. Verfahren nach einem der vorhergehenden Ansprüche,
**dadurch gekennzeichnet,**
**dass** die Trocknung im Vakuum erfolgt.

21. Verfahren nach einem der vorhergehenden Ansprüche,
**dadurch gekennzeichnet,**
**dass** gelöste Übergangsmetallverbindungen und/oder andere im Dekantat oder Filtrat verbliebene Verunreinigungen unter Verwendung eines oder mehrerer Ionenaustauscher abgetrennt werden.

22. Verfahren nach einem der vorhergehenden Ansprüche,
**dadurch gekennzeichnet,**
**dass** die nach Passieren des beziehungsweise der Ionenaustauscher erhaltene Lösung durch Eindampfen von Wasser befreit wird.

23. Verfahren nach Anspruch 22,
**dadurch gekennzeichnet,**
**dass** zumindest ein Teil des nach Passieren des beziehungsweise der Ionenaustauscher erhaltenen Lösung enthaltenen Salzes oder Salzgemisch durch Eindampfkristallisation abgetrennt wird.

24. Verfahren nach einem der vorhergehenden Ansprüche,
**dadurch gekennzeichnet,**
**dass** es sich bei dem gelösten Salz um Natriumchlorid handelt.

25. Verfahren nach Anspruch 24,
**dadurch gekennzeichnet, dass** das isolierte Natriumchlorid als Einsatzmaterial in der Chloralkalielektrolyse verwendet wird.

26. Verfahren nach Anspruch 1,
**dadurch gekennzeichnet, dass** es sich bei den Übergangsmetallverbindungen um Cobaltverbindungen handelt.

27. Verfahren nach einem der vorhergehenden Ansprüche,
**dadurch gekennzeichnet, dass** die abgetrennten Cobaltverbindungen nach Trocknen in Dicobaltoctacarbonyl oder daraus generierbare Spezies überführt werden.

## Claims

1. A process for recovering transition metals selected from the group consisting of ruthenium, platinum, palladium and cobalt from salt-containing reaction mixtures from processes catalysed by transition metals, **characterized in that** it comprises separating the transition metal compounds and salt or salts together with organic impurities from the reaction mixtures at a neutral to alkaline pH, if desired after neutralization or alkalization by base addition, and introducing them into a combustion zone having temperatures of from 500 to 2000°C, quenching the flue gas/salt mixture leaving the combustion zone with water, separating the combustion residue comprising transition metal from the resulting quench solution, drying it at temperatures of from 80 to 180°C and reusing it as starting material for catalyst production.

2. A process according to claim 1, **characterized in that** the reaction mixture is, before separating off the mixture of salt or salts, transition metal compounds and organic impurities, subjected to a pretreatment to decompose the transition metal catalyst into downstream products which are essentially insoluble in the reaction mixture or are nonvolatile.

3. A process according to claim 1 or 2, **characterized in that** the pretreatment of the reaction mixture is carried out by bringing it into contact with oxygen or an oxygen-containing gas mixture.

4. A process according to claim 1, **characterized in that** one or more basic substances are added to the mixture of salt, transition metal compound and organic impurities.

5. A process according to any one of the preceding claims, **characterized in that** the mixture of salt, transition metal compound and organic impurities is obtained by freeing the reaction mixture of volatile components by distillation.

6. A process according to any one of the preceding claims, **characterized in that** the reaction mixture is, if desired after distilling off part of the volatile components in various, passed through a thin film evaporator or thin film drier to separate off the product and possibly further components.

7. A process according to any one of the preceding claims, **characterized in that** the mixture of salt or salts, transition metal compounds and organic impurities is separated by filtration from the reaction mixture which may have previously been freed of further components of the reaction mixture.

8. A process according to any one of the preceding claims, **characterized in that** the mixture of salt or salts, transition metal compounds and organic impurities is conveyed pneumatically into the combustion zone.

9. A process according to any one of the preceding claims, **characterized in that** the combustion zone is divided into a precombustion chamber and a main combustion chamber and the salt mixture is introduced at the constriction between precombustion chamber and main combustion chamber.

10. A process according to claim 1 or 9, **characterized in that** the precombustion chamber used is a lined combustion chamber and the main combustion chamber used is a cooled combustion chamber.

11. A process according to any one of claims 1 to 10,
**characterized in that** hydrogen, natural gas or hydrocarbon-containing gases or mixtures thereof are used for auxiliary firing.

12. A process according to any one of claims 1 to 10, **characterized in that** fuel oil and/or liquid hydrocarbons are used for auxiliary firing.

13. A process according to any one of claims 1 to 10,
**characterized in that** the temperature in the combustion zone is from 800 to 1800°C.

14. A process according to either one of claims 11 and 12, **characterized in that** the auxiliary firing is operated using an excess of oxygen, with the oxygen being used as such or coming from air.

15. A process according to any one of the preceding claims, **characterized in that** the flue gas/salt mixture leaving the combustion zone is quenched with water, if desired after cooling.

16. A process according to any one of the preceding claims, **characterized in that** the separation of the insoluble transition metal compound or the mixture of insoluble transition metal compounds from the quench solution is carried out by decantation or filtration.

17. A process according to any one of the preceding claims, **characterized in that** the suspension comprising the insoluble transition metal compound or compounds, water and the dissolved salt or salt mixture is treated with one or more flocculants before decantation from the insoluble transition metal compound or compounds.

18. A process according to any one of the preceding claims, **characterized in that** the insoluble transition metal compounds which have been separated off are freed of adhering soluble salts or adhering soluble salt mixtures by washing.

19. A process according to any one of the preceding claims, **characterized in that** drying of the transition metal compounds which have been separated off is carried out at temperatures of from 100 to 130°C.

20. A process according to any one of the preceding claims, **characterized in that** drying is carried out under reduced pressure.

21. A process according to any one of the preceding claims, **characterized in that** dissolved transition metal compounds and/or other impurities remaining in the decantate or filtrate are separated off using one or more ion exchangers.

22. A process according to any one of the preceding claims, **characterized in that** the solution obtained after passing through the ion exchanger or exchangers is freed of water by evaporation.

23. A process according to claim 22, **characterized in that** at least part of the salt or salt mixture present in the solution obtained after passing through the ion exchanger or exchangers is separated off by evaporative crystallization.

24. A process according to any one of the preceding claims, **characterized in that** the dissolved salt is sodium chloride.

25. A process according to claim 24, **characterized in that** the sodium chloride isolated is used as starting material in chloralkali electrolysis.

26. A process according to claim 1, **characterized in that** the transition metal compounds are cobalt compounds.

27. A process according to any one of the preceding claims, **characterized in that** the cobalt compounds which have been separated off are, after drying, converted into dicobalt octacarbonyl or species which can be generated therefrom.

## Revendications

1. Procédé de récupération de métaux de transition choisis parmi le groupe qui est formé du ruthénium, du platine, du palladium et du cobalt, à partir de mélanges réactionnels contenant du(des) sel(s) issus de processus catalysés par le métal de transition,
**caractérisé en ce que**
les combinaisons de métal de transition et le (ou les) sel(s) ayant des impuretés organiques provenant des mélanges réactionnels, ayant une valeur pH neutre ou alcaline, le cas échéant après neutralisation ou alcalinisation par ajout d'une base, sont isolés et transportés dans une zone de combustion à des températures de 500 à 2000 °C, le mélange gaz de combustion/ sel quittant la zone de combustion est éteint avec de l'eau, et le résidu de combustion contenant le métal de transition séparé de la saumure d'extinction obtenue, séché à des températures de 80 à 180 °C est récupéré comme ingrédient pour la fabrication de catalyseurs.

2. Procédé selon la revendication 1,
**caractérisé en ce que**
le mélange réactionnel est soumis, avant la séparation du mélange de sel ou de sels, de combinaisons de métal de transition et d'impuretés organiques, à un traitement préparatoire pour décomposer le catalyseur de métal de transition en produits de décomposition largement insolubles ou non évaporable dans le mélange réactionnel.

3. Procédé selon la revendication 1 ou 2,
**caractérisé en ce que**
le traitement préparatoire du mélange réactionnel se fait par sa mise en contact avec de l'oxygène ou un mélange gazeux contenant de l'oxygène.

4. Procédé selon la revendication 1,
**caractérisé en ce qu'**
au mélange de sel, de combinaison de métal de transition et d'impuretés organiques sont ajoutées une ou plusieurs substances réactives basiques.

5. Procédé selon une des revendications précédentes,
**caractérisé en ce que**
le mélange de sel, de combinaison de métal de transition et d'impuretés organiques est obtenu par le dégagement par distillation du mélange réactionnel de composants évaporables.

6. Procédé selon une des revendications précédentes,
**caractérisé en ce que**
le mélange réactionnel, le cas échéant après distillation préalable d'une partie des composants évaporables, est transporté pour séparer le produit et le cas échéant d'autres composants via un évaporateur à couche mince ou un sécheur à couche mince.

7. Procédé selon une des revendications précédentes,
**caractérisé en ce que**
le mélange de sel ou de sels, de combinaisons de métal de transition et d'impuretés organiques est séparé par filtration du mélange réactionnel le cas échéant préalablement débarrassé d'autres composants du mélange réactionnel.

8. Procédé selon une des revendications précédentes,
**caractérisé en ce que**
le transport du mélange de sel ou de sels, de combinaisons de métal de transition et d'impuretés organiques dans la zone de combustion se fait pneumatiquement.

9. Procédé selon une des revendications précédentes,
**caractérisé en ce que**
la zone de combustion est divisée en une préchambre de combustion et une chambre de combustion principale, et l'introduction du mélange salin a lieu au niveau du rétrécissement entre la préchambre de combustion et la chambre de combustion principale.

10. Procédé selon la revendication 1 ou 9,
**caractérisé en ce qu'**
en guise de préchambre de combustion est utilisée une chambre de combustion dotée d'un revêtement et en guise de chambre de combustion principale une chambre de combustion refroidie.

11. Procédé selon une des revendications 1 à 10,
**caractérisé en ce que**
le chauffage d'appoint utilise de l'hydrogène, du gaz naturel ou des gaz contenant des hydrocarbures ou leurs mélanges.

12. Procédé selon une des revendications 1 à 10,
**caractérisé en ce que**
le chauffage d'appoint utilise du pétrole et/ou des hydrocarbures liquides.

13. Procédé selon une des revendications 1 à 10,
**caractérisé en ce que**
la température dans la zone de combustion est de 800 à 1800 °C.

14. Procédé selon une des revendications 11 ou 12,
**caractérisé en ce que**
le chauffage d'appoint fonctionne avec un excédent d'oxygène, l'oxygène étant injecté tel quel ou provenant de l'air.

15. Procédé selon une des revendications précédentes,
**caractérisé en ce que**
le mélange gaz de combustion/sel quittant la zone de combustion est éteint avec de l'eau le cas échéant après refroidissement.

16. Procédé selon une des revendications précédentes,
**caractérisé en ce que**
la séparation de la combinaison de métal de transition insoluble ou du mélange de combinaisons de métal de transition insolubles de la saumure d'extinction se fait par décantation ou filtration.

17. Procédé selon une des revendications précédentes,
**caractérisé en ce que**
la suspension de la combinaison de métal de transition insoluble ou des combinaisons de métal de transition insolubles d'eau et de sel ou de mélange de sels dissous est traitée avec un ou plusieurs floculants avant la décantation de la combinaison de métal de transition insoluble ou des combinaisons de métal de transition insolubles.

18. Procédé selon une des revendications précédentes,
**caractérisé en ce que**
les combinaisons de métal de transition insolubles séparées sont débarrassées par lavage du sel soluble adhérent ou du mélange de sels adhérent.

19. Procédé selon une des revendications précédentes,
**caractérisé en ce que**
le séchage des combinaisons de métal de transition séparées a lieu à des températures de 100 à 130 °C.

20. Procédé selon une des revendications précédentes,
**caractérisé en ce que**
le séchage a lieu sous vide.

21. Procédé selon une des revendications précédentes,
**caractérisé en ce que**
les combinaisons de métal de transition dissoutes et/ou autres impuretés restées dans le décantat ou le filtrat sont séparées en utilisant un ou plusieurs échangeurs d'ions.

22. Procédé selon une des revendications précédentes,
**caractérisé en ce que**
la solution obtenue par le passage dans le ou les échangeurs d'ions est débarrassée de son eau par évaporation.

23. Procédé selon la revendication 22,
**caractérisé en ce qu'**
au moins une partie du sel ou du mélange de sels contenu dans la solution obtenue après le passage dans le ou les échangeurs d'ions est séparée par cristallisation par évaporation.

24. Procédé selon une des revendications précédentes,
**caractérisé en ce que**
le sel dissous est du chlorure de sodium.

25. Procédé selon la revendication 24,
**caractérisé en ce que**
le chlorure de sodium isolé est utilisé comme ingrédient dans l'électrolyse à l'alcali et chlore.

26. Procédé selon une la revendication 1,
**caractérisé en ce que**
les combinaisons de métal de transition sont des combinaisons de cobalt.

27. Procédé selon une des revendications précédentes,
**caractérisé en ce que**
les combinaisons de cobalt séparées sont transformées après séchage en octacarbonyle de dicobalt ou un genre productible à partir de celui-ci.
